# EUROPÄISCHE PATENTANMELDUNG

(11) **EP 1 739 319 A2**
(43) Veröffentlichungstag der Anmeldung: **03.01.2007**
(21) Anmeldenummer: 06116343.2
(22) Anmeldetag: 29.06.2006
(51) Int. Cl.: F16C 32/04

(54) **Elektromagnetisches Lagersystem**

(30) Priorität: 01.07.2005 DE 102005030724
(71) Anmelder: Levitec GmbH, 35633 Lahnau (DE)
(72) Erfinder: Prof. Amrhein, Wolfgang, 4100, Ottensheim (AT); Dr. Silber, Siegfried, 4202, Kirchschlag (AT); Reisinger, Martin, 4072, Alkoven (AT)
(74) Vertreter: Knefel, Cordula

(57) **Zusammenfassung**

Elektrisches Magnetlagersystem, bestehend aus mindestens einer Radiallagerkomponente (1) mit mindestens einem ein- oder mehrsträngigen Wicklungssystem (2), mindestens einer Axiallagerkomponente (3), die mit mindestens einer Radiallagerkomponente (1) in magnetischer Verbindung steht, einem zumindest in Teilen ferromagnetischem Rotor (5) und mindestens einer Signal- und Leistungselektronik (4), wobei die Axiallagerkomponente (3), die zur aktiven Regelung der Axiallage des Rotors (5) dient, wicklungsfrei ausgeführt ist, und die Axiallagerung durch das Wicklungssystem (2) der Radiallagerkomponente (1) erzielbar ist.

## Beschreibung

Die Erfindung betrifft ein elektrisches Magnetlagersystem, bestehend aus mindestens einer Radiallagerkomponente mit mindestens einem ein- oder mehrsträngigen Wicklungssystem, mindestens einer Axiallagerkomponente, die mit mindestens einer Radiallagerkomponente in magnetischer Verbindung steht, einem zumindest in Teilen ferromagnetischen Rotor und mindestens einer Signal- und Leistungselektronik.

Zum Stand der Technik gehören Magnetlagersysteme mit einer getrennten Ausführung von Radiallager und Axiallager. Die klassische Ausführungsform von Magnetlagersystemen weist hierbei zwei Radiallager und ein Axiallager auf. Diese zum Stand der Technik gehörenden Magnetlagersysteme weisen zwar den Vorteil einer weitgehenden entkoppelten Regelung der Rotorlage in den Hauptachsen auf, sie haben jedoch den Nachteil, dass ein sehr großer mechanischer Aufwand (Materialkosten, Montagekosten) erforderlich ist. Durch eine sehr hohe Phasenanzahl (typisch: 2 x 4 für die Radiallager, 1 bis 2 für Axiallager) entstehen sehr hohe Umrichterkosten. Dreiphasige Standard-Umrichter sind darüber hinaus nicht verwendbar.

Zum Stand der Technik gehören darüber hinaus Kombilager mit permanentmagnetischer Vormagnetisierung der Luftspalte. In einer modernen Ausführungsform bedeutet das, dass ein Axiallager mit einem Radiallager funktionell kombiniert wird.

Diese Lager haben den Vorteil eines reduzierten mechanischen Aufwandes gegenüber den genannten Magnetlagersystemen mit einer getrennten Ausführung von Radiallager und Axiallager.

Durch die permanentmagnetische Vormagnetisierung des Luftspaltes erhält man darüber hinaus eine erhöhte Kraftausbeute beziehungsweise einen reduzierten elektrischen Leistungsbedarf. Weiterer Vorteil ist die funktionelle Integration durch eine gemeinsame Nutzung des permanentmagnetischen Flusses im Radial- und Axiallager.

Nachteilig bei diesen zum Stand der Technik gehörenden Magnetlagern ist jedoch die hohe Anzahl von Phasen: minimal 2 x 3 für die Radiallager, eine für das Axiallager. Weiterer Nachteil ist, dass diese Systeme ungeeignet sind für die Verwendung von dreiphasigen Standard-Umrichtern mit B6-Schaltung. Ein weiterer Nachteil ist die erschwerte Montage durch Axiallager mit beidseitig in den Außendurchmessern der Rotorscheibe hineinreichenden "Backen" und der hohe Materialaufwand.

Zum Stand der Technik gehören weiterhin konische Magnetlager, das heißt Lager mit konischem Luftspalt für eine gleichzeitige Kraftentwicklung in radialer und axialer Richtung. Diese Lager haben zwar den Vorteil, dass nur zwei konische Lager für die Rotorlagerung in fünf Freiheitsgraden erforderlich sind. Der Nachteil besteht jedoch in dem hohen mechanischen Aufwand zur Herstellung konischer Luftspalte in lamellierten Rotoren und Statoren (Blechpaketen). Darüber hinaus erfordern diese Lager eine schwierige und sehr toleranzempfindliche Montage.

Bisherige Konzepte dieser zum Stand der Technik gehörenden Lager sind nicht für den breiten industriellen Einsatz geeignet.

Das der Erfindung zugrunde liegende technische Problem besteht darin, ein Magnetlagersystem anzugeben, welches die genannten Nachteile nicht aufweist.

Dadurch, dass das erfindungsgemäße elektrische Magnetlagersystem aus mindestens einer Radiallagerkomponente mit mindestens einem ein- oder mehrsträngigen Wicklungssystem, aus mindestens einer Axiallagerkomponente, die mit der mindestens einen Radiallagerkomponente in magnetischer Verbindung steht, einem zumindest in Teilen ferromagnetischen Rotor und mindestens einer Signal- und Leistungselektronik besteht und dadurch, dass die Axiallagerkomponente, die zur aktiven Regelung der Axiallage des Rotors dient, wicklungsfrei ausgeführt ist und die Axiallagerung durch das Wicklungssystem der Radiallagerkomponente erzielbar ist, ist das Magnetlagersystem sowohl mechanisch wie auch elektrisch sehr einfach und preiswert aufgebaut.

Die Signal- und Leistungselektronik dient vorteilhaft zur Ermittlung der Rotorlage in den zu regelnden Freiheitsgraden sowie zur Bereitstellung der zur Lageregelung erforderlichen elektrischen Größen, insbesondere in Form von eingeprägten Spannungen oder Strömen an den elektrischen Anschlüssen der Lagerkomponenten.

Vorteile des erfindungsgemäßen Magnetlagersystems sind:
- keine gesonderte Wicklung für die Regelung der Axialposition erforderlich;
- der für die Regelung erforderliche magnetische Steuerfluss wird durch die Radiallagerwicklung miterzeugt;
- einfache Integration von Permanentmagneten zur Erzeugung des Vormagnetisierungsflusses in den Luftspalten möglich;
- dadurch geringe elektrische Leistungsaufnahme;
- Magnetlagersysteme mit nur 2 x 3 Strängen ausführbar;
- Eignung für die Verwendung von dreiphasigen Standard-Umrichtern (für die gesamte Lagerung in fünf Freiheitsgraden werden nur zwei dreiphasige Umrichter benötigt);
- einfache Montage der Axiallagerkomponenten, keine elektrischen Anschlüsse erforderlich.

Die wesentlichen Bestandteile des erfindungsgemäßen Magnetlagersystems sind die Radiallagerkomponente, die wicklungsfreie Axiallagerkomponente, der Rotor und die Steuer- und Leistungselektronik.

Ausführungsformen des Radiallagers sind zum Beispiel:
- elektromagnetisches Radiallager;
- elektromagnetisches Radiallager mit Gleichstromvormagnetisierung (bekannt auch unter dem Begriff "Elektromagnetlager");
- elektromagnetisches/permanentmagnetisches Radiallager mit radial nach außen oder nach innen gerichteten permanentmagnetischen Luftspaltflüssen (bekannt auch unter dem Begriff "Unipolmagnetlager");
- elektromagnetisches/permanentmagnetisches Radiallager mit radial nach außen und nach innen gerichteten permanentmagnetischen Luftspaltflüssen (bekannt auch unter dem Begriff "Multipollager").

Die Radiallagerkomponente besteht vorteilhaft aus
- einem lamellierten ferromagnetischen Stator mit einzelnen durch das Statorjoch verbundenen Polen, oft in Form von konzentrierten Statorschenkeln ausgeführt,
- einem oder mehreren optionalen Permanentmagneten zur Vormagnetisierung des Luftspaltes, zum Teil mit ferromagnetischen Polschuhen ausgeführt, sowie
- einem mehrsträngigen Wicklungssystem, das sich aus einzelnen Strängen zusammensetzt, die einzeln zu den Phasen des Umrichters geführt werden oder miteinander verschaltet sind. Im einfachsten, für die Praxis relevanten Fall handelt es sich hierbei um vier oder drei auf ferromagnetischen Statorschenkeln montierten Spulen. In rein elektromagnetischen Lagern werden häufig acht Wicklungsstränge verwendet (zum Teil ergänzt durch Gleichstromvormagnetisierungswicklungen).

Die elektromagnetischen Pole sowie optional die permanentmagnetischen Pole der Radiallagerkomponente zeigen vorzugsweise mit ihrer Stirnseite zum Rotorluftspalt. Hier werden die kraftbildenden und optional die vormagnetisierenden elektromagnetischen oder permanentmagnetischen Flüsse auf die Rotorluftspalte übertragen.

Weiterhin weist die Radiallagerkomponente vorteilhaft eine Kontaktfläche zur Axiallagerkomponente auf. Auch über diese Fläche werden - geführt von magnetisch leitfähigen Werkstücken der Axiallagerkomponente - kraftbildende und optional vormagnetisierende Flüsse auf den Rotor übertragen. Es muss sich hierbei nicht um zum obigen Fall identische Flüsse handeln.

Es werden in der Radiallagerkomponente grundsätzlich unterschiedliche magnetische Flusskreisverläufe unterschieden:
Eine Art (Variante A) stellt einen elektromagnetischen oder permanentmagnetischen Flusskreis (oder Kombinationen davon) dar, der über Teile (zum Beispiel einen Schenkel) der Radiallagerkomponente fließt, durch den Luftspalt zum Rotor eintritt, an anderer Stelle aus dem Rotor wieder austritt, durch den Luftspalt fließt und sich in der Radiallagerkomponente (zum Beispiel über einen Schenkel und das Joch) zu einem geschlossenen Kreis schließt. Der Flussverlauf erfolgt hierbei vorzugsweise in der gemeinsamen Stator-/Rotorebene und fließt durch zwei Komponenten (Radiallager, Rotor), eventuell ergänzt durch Zwischenstücke.

Eine zweite Variante (Variante B) stellt einen elektromagnetischen oder permanentmagnetischen Flusskreis (oder Kombinationen davon) dar, der über Teile (zum Beispiel einen Schenkel) der Radiallagerkomponente fließt, durch den Luftspalt zum Rotor eintritt, den Rotor axial durchquert, auf der Höhe der zweiten Radiallagerkomponente aus dem Rotor wieder austritt, durch den Luftspalt fließt, durch die zweite Radiallagerkomponente (zum Beispiel über einen Schenkel und das Joch) fließt, aus der zweiten Radiallagerkomponente austritt, axial über ein Flussleitstück oder über permanentmagnetisches Material zur Ausgangsradiallagerkomponente (zum Beispiel das Joch) zurückfließt und sich in dieser Komponente zu einem geschlossenen Kreis schließt. Der Flussverlauf erfolgt hierbei vorzugsweise in der Radial-Längsebene oder dreidimensional und fließt durch mehrere Komponenten (Radiallager, Rotor, Zwischenstücke, eventuell Permanentmagnete).

Eine weitere Art (Variante C) stellt einen elektromagnetischen oder permanentmagnetischen Flusskreis (oder Kombinationen davon) dar, der die Stator-/Rotorebene der Radiallagerkomponente verlässt und an einer Kontaktstelle (zum Beispiel im Bereich des Statorjoches) oder über einen angrenzenden Luftspalt in die benachbarte Axiallagerkomponente fließt, diese durchdringt, an anderer Stelle einen Luftspalt zwischen der Axiallagerkomponente und dem Rotor (vorzugsweise einen Luftspalt in axialer Richtung) durchquert, den Rotor durchdringt, einen weiteren Luftspalt (vorzugsweise aber nicht notwendigerweise einen Luftspalt in radialer Richtung) durchquert und sich im Stator der Radiallagerkomponente schließt. Der Flussverlauf erfolgt hierbei ebenfalls vorzugsweise in der Radial-Längsebene oder dreidimensional und fließt durch drei Komponenten (Radiallagerkomponente, Axiallagerkomponente, Rotor).

Die wicklungsfreie Axiallagerkomponente ist wesentlicher Bestandteil des Kombilagers. Sie enthält keine eigene Axialwicklung und besteht im einfachsten Fall aus einem oder mehreren ferromagnetischen Flussleitstücken und in einer erweiterten Form aus einem oder mehreren zusätzlichen Permanentmagneten.

Die Axiallagerkomponente führt vorteilhaft einen elektromagnetischen Steuerfluss, der in den Wicklungen der Radiallagerkomponente erzeugt wird. Optional kann die Axiallagerkomponente auch die Flussführung eines permanentmagnetischen Flusses übernehmen. Dieser kommt, wie oben beschrieben, aus der Radiallagerkomponente oder wird eigens in der Axiallagerkomponente durch eine entsprechende Bestückung mit Permanentmagneten erzeugt. Die Flussführung kann hierbei entsprechend der Variante B erfolgen oder zwischen der Axiallagerkomponente und dem Rotor verlaufen. Beispielhaft sei hier der Pfad Axiallagerkomponente - Luftspalt (mit vorwiegend axialer Ausrichtung) - Rotor - Luftspalt (mit vorwiegend axialer oder radialer Ausrichtung) - Axiallagerkomponente angeführt (Variante D). Die Permanentmagnete können hierbei sowohl in der Axiallagerkomponente (Variante D1) oder im Rotor sitzen.

Eine weitere Variante E weist einen elektromagnetischen oder permanentmagnetischen Flusskreis (oder Kombinationen davon) auf, der von einer Axiallagerkomponente über einen Luftspalt durch den Rotor, von dort über einen Luftspalt zu einer zweiten Axiallagerkomponente und sich über ein oder mehrere Statorteile schließt.

Die oben angeführten Varianten sind lediglich als beispielhaft zu sehen. Weitere Ausführungsvarianten sind möglich.

Ein wichtiges Element bei permanentmagnetisch unterstützten Lagern ist das Zusammenführen des permanentmagnetischen Vormagnetisierungsflusses mit dem elektromagnetischen Steuerfluss im jeweiligen Luftspalt, der für die Kraftübertragung vorgesehen ist. Durch die Unterstützung des permanentmagnetischen Hilfsflusses lassen sich die einzustellenden Lagerkräfte mit kleinerem elektrischen Leistungsverbrauch erzielen. Dies gilt sowohl für die Axialwie auch die Radialkrafterzeugung.

Der Rotor ist vorzugsweise aus ferromagnetischem Werkstoff aufgebaut. Wesentliche Bestandteile können ein oder mehrere Rotorblechpakete sein, die in magnetischer Flussverbindung zu den Radiallagerkomponenten und/oder den Axiallagerkomponenten stehen, eine Welle, die eine Trägerfunktion für die Rotorkomponenten ausübt und im Falle einer ferromagnetischen Ausführung auch die magnetische Flussführung unterstützt, sowie optional ein oder mehrere Permanentmagnete, die den Fluss für die Vormagnetisierung eines oder mehrerer Luftspalte aufbauen.

Der Rotor kann auch Träger der Rotorkomponente eines Antriebsmotors oder anderer maschineller Teile sein. Beispiele sind Pumpen-, Lüfter-, Kompressoren- oder Getrieberäder.

Der Rotor ist vorzugsweise in alle Kraft erzeugenden Flusskreise eingebunden. Die Flüsse werden über vornehmlich radiale, axiale oder konische Luftspalte an den Rotor übertragen.

An die Signal- und Leistungselektronik wird eine Vielzahl von Anforderungen gestellt. Hierzu zählen unter anderem die sensorlose oder sensorbehaftete Ermittlung der Rotorlage in den zu regelnden Freiheitsgraden, Steuerungs-und Regelfunktionen, Verwaltung der Kommunikationsschnittstellen sowie die Bereitstellung der zur Lageregelung erforderlichen elektrischen Größen an den elektrischen Anschlüssen der Lagerkomponenten, insbesondere in Form von eingeprägten Spannungen oder Strömen. Die Signalelektronik wird von Mikro- oder Signalprozessoren beziehungsweise Mikrocontrollern gesteuert. Die Endstufe der Leistungselektronik wird in der Regel mit schaltenden Leistungshalbleitern, wie Bipolar-, MOSFET- oder IGB-Transistoren in Form von Halb- oder Vollbrückenschaltungen realisiert.

Die Signalelektronik kann auch zum Beispiel Sensoren zur Erfassung der Rotorposition, der Rotorwinkellage (insbesondere im Zusammenhang mit dem Betrieb eines Antriebsmotors) oder zur Erfassung von elektrischen oder thermischen Größen enthalten.

Die elektromagnetischen Steuerflüsse werden in den spannungs- oder stromgespeisten Wicklungen der Radiallagerkomponenten erzeugt. Die Stränge der Radiallagerkomponenten können einzeln oder in einer Verschaltung (zum Beispiel Stern) an die Phasen der Leistungselektronik angeschlossen sein. Durch eine entsprechende Variation der Strangströme können die Steuerflüsse in den radialen Luftspalten der Radiallagerkomponenten den Lagerkraftbedürfnissen angepasst werden.

Es ist möglich, den einzelnen Strangströmen elektrisch zusätzliche Stromkomponenten zu überlagern. Wird dies beispielsweise in einer Weise bewerkstelligt, dass die Summe der einzelnen Strangströme einen Wert ungleich null ergibt, so stellt sich je nach Vorzeichen ein magnetischer Fluss ein, der aus der Radiallagerkomponente aus oder in diese Komponente eintritt. Diese Flusskomponente kann für die Axialkrafterzeugung in der Axiallagerkomponente genutzt werden.

Im Fall von elektrisch einzeln angeschlossenen Strängen kann diese Maßnahme ohne Einschränkung durchgeführt werden, im Fall von sterngeschalteten Wicklungen ist der Sternpunkt für die Ableitung des Summenstromes zu kontaktieren. Hierfür gibt es verschiedene grundsätzliche Möglichkeiten. Eine konstruktive Ausführungsvariante besteht darin, den Sternpunktanschluss an die Leistungselektronik zurückzuführen. In einer anderen Variante ist vorgesehen, die Wicklungssysteme von zwei Radiallagerkomponenten miteinander zu verbinden. Dies kann zum Beispiel über die Verbindung der Sternpunkte erfolgen. Somit wird bei einem Lagersystem mit zwei dreisträngigen Radiallagerkomponenten die Möglichkeit geschaffen, zusätzlich zu den radialkraftbildenden Strangstromkomponenten weitere Strangstromkomponenten in die Wicklung einfließen zu lassen, die zwischen den Wicklungen der Radiallagerkomponenten zu einem Ausgleichsstrom führen, der den Feldaufbau in der Axiallagerkomponente bewerkstelligt und damit eine Regelung der axialen Rotorposition ermöglicht.

Für eine effektive Nutzung der zur Lagerung elektrisch bereitgestellten Leistung ist es zweckmäßig, den Luftspalt über permanentmagnetische Flüsse vorzumagnetisieren. Ein Nebeneffekt hierbei ist gleichzeitig auch eine Linearisierung des Arbeitspunktes im Hinblick auf den Reglerentwurf. Letzteres kann auch über eine Vormagnetisierung durch den Wicklungsströmen überlagerte Gleichströme erreicht werden. Der Gleichflussaufbau in den Radiallagerkomponenten kann auch über eigene Gleichstromwicklungen erfolgen, die jeweils neben oder über den Hauptwicklungen (in Flussrichtung) angebracht sind. Solche Konstruktionen sind aus konventionellen Lagern bekannt.

Für die Erzeugung des permanentmagnetischen Vormagnetisierungsflusses werden Permanentmagnete vorgeschlagen, die wahlweise in den Radiallagerkomponenten, in den Axiallagerkomponenten oder dem Rotor angebracht sind. Die Permanentmagnete können auch in mehreren Komponenten gleichzeitig oder in weiteren Komponenten platziert sein.

Zweck dieser Permanentmagnete und der angeschlossenen magnetischen Kreise ist es, einen permanentmagnetischen Fluss derart zu erzeugen, dass sich in den Steuerflussluftspaltstrecken der Vormagnetisierungsfluss überlagert. Zur Führung der entsprechenden magnetischen Kreise ist es teilweise nötig, den permanentmagnetischen Hilfsfluss über zusätzliche, nicht zur Lagerkrafterzeugung benötigte Luftspalte zu führen. Letzteres kann auch entsprechend für die elektromagnetischen Steuerflüsse gelten.

Vorteilhaft wird bei dem erfindungsgemäßen Magnetlagersystem der für die aktive Regelung der Axiallage des Rotors benötigte axiale elektromagnetische Steuerfluss von dem Wicklungssystem und somit von mindestens einem Strang eines oder mehrerer Radiallagerkomponenten erzeugt und wird über mindestens ein magnetisch leitfähiges Werkstück der Axiallagerkomponente geführt.

Die magnetische Verbindungsstelle der beiden Komponenten ist zum Beispiel im Bereich des Statorjoches der Radiallagerkomponente vorgesehen.

Im Bereich der Steuerflussführung kann auch permanentmagnetisches Material angebracht sein, beispielsweise auch direkt an der Verbindungsstelle zwischen der Radiallager-und der Axiallagerkomponente.

Vorteilhaft führt mindestens ein Wicklungsstrang des Wicklungssystems der Radiallagerkomponente einen Strom, der aus mindestens einem Steuersignal resultiert, das sich aus Teilkomponenten, insbesondere regelungstechnisch relevanten Teilkomponenten zusammensetzt oder sich analytisch in solche zerlegen lässt.

Die Zusammenführung der Stromkomponenten erfolgt beispielsweise in der Signalelektronik, zum Beispiel im Mikrocontroller oder in einer geeigneten Operationsverstärkerschaltung.

Vorteilhaft lässt sich mindestens eines der Steuersignale aus einer Komponente zur Beeinflussung der Radiallage und einer Komponente zur Beeinflussung der Axiallage des Rotors und gegebenenfalls aus einer oder mehreren Zusatzkomponenten des elektrischen Steuersignales, insbesondere zur Linearisierung der regelungstechnisch relevanten Arbeitspunkte zusammensetzen oder sich in diese zerlegen.

Als Zusatzkomponente des elektrischen Steuersignales kann der Strom oder die Spannung vorgesehen sein. Das Steuersignal kann auch ein Leistungssignal sein.

Um die Regelungseigenschaften zu verbessern beziehungsweise auch die Auswirkungen auf die Lagerkräfte bei Steuerstromänderungen zu erhöhen, kann dem Steuerstrom eine Gleichkomponente hinzugefügt werden, die im Lagerspalt einen Ruhefluss bewirkt. Der Arbeitspunkt der parabolischen Kraft-Durchflutungskennlinie wandert dann vom Ursprung der Parabel auf ein höheres Niveau. Der der Gleichkomponente überlagerte Steuerstrom führt aufgrund der hohen Steigung der Kurve im Bereich des Arbeitspunktes zu wesentlich höheren Lagerkraftänderungen. Der Arbeitsbereich kann bei entsprechender Wahl des Ruheflusses näherungsweise als linear betrachtet werden.

Gemäß einer vorteilhaften Ausführungsform der Erfindung wird der Fluss zur Beeinflussung der Radiallage und der Fluss zur Beeinflussung der Axiallage des Rotors durch getrennte, an der Radiallagerkomponente angebrachte Wicklungen erzeugt.

Diese Wicklungen können auf einem gemeinsamen oder an getrennten Schenkeln angebracht sein.

Es ist auch möglich, die Wicklungen nicht nur als konzentrierte Wicklungen, sondern auch als verteilte und/oder gesehnte Wicklungen auszuführen.

Gemäß einer weiteren Ausführungsform der Erfindung ist die Stromsumme der an die Leistungselektronik angeschlossenen Wicklungsstränge der Radiallagerkomponente ungleich null.

Die Stromsummen können für die Erzeugung der Axialkräfte verwendet werden, was jedoch nicht bedeutet, dass dieser Wert der Axialkraft entspricht. Zum Beispiel können sich bei zweisträngigen Radiallagersystemen auch ohne die Verwendung einer Axialkrafterzeugungsvorrichtung Stromsummen ungleich null ergeben.

Vorteilhaft sind die Wicklungssysteme der Radiallagerkomponenten über mindestens eine elektrische Verbindung zusammengeschlossen, und somit ist eine Stromführung zwischen diesen Teilen erzielbar.

Über diese elektrische Verbindung können Ströme zwischen den angeschlossenen Leistungselektronikschaltungen fließen.

Gemäß einer vorteilhaften Ausführungsform der Erfindung ist mindestens eine Radiallagerkomponente mit mindestens einem Permanentmagneten bestückt, der mindestens einen Luftspalt der Radiallagerkomponente oder der Axiallagerkomponente vormagnetisiert.

Es ist auch vorteilhaft, wenn mindestens eine Axiallagerkomponente mit mindestens einem Permanentmagneten bestückt ist, der mindestens einen Luftspalt der Radiallagerkomponente oder der Axiallagerkomponente vormagnetisiert.

Gemäß einer weiteren Ausführungsform der Erfindung ist der Rotor mit mindestens einem Permanentmagneten bestückt, der mindestens einen Luftspalt der Radiallagerkomponente oder der Axiallagerkomponente vormagnetisiert.

Die Magnete können also unterschiedlich in den Komponenten eingebaut sein. Beispiele sind die Platzierung direkt am Luftspalt, die Einbettung im ferromagnetischen Material (zum Beispiel mit umgebenden Sättigungsstegen), an der Trennstelle der Komponenten oder innerhalb der Komponenten.

Vorteilhaft ist mindestens eine zur Flussführung dienende Zusatzkomponente mit mindestens einem Permanentmagneten bestückt, der mindestens einen Luftspalt der Radiallagerkomponente oder der Axiallagerkomponente vormagnetisiert.

Es ist also vorteilhaft wenigstens eine Zusatzkomponente zu den Axial- und Radiallagerkomponenten vorgesehen, wie sie beispielsweise bei der Realisierung von Unipolarlagersystemen verwendet wird. Die Zusatzkomponente beinhaltet in diesem Fall einen oder mehrere Permanentmagnete für die Erzeugung des Ruheflusses.

Diese wenigstens eine Zusatzkomponente kann zum Beispiel seitlich zur Radial- oder Axiallagerkomponente angebracht sein, eine oder mehrere dieser Komponenten seitlich umschließen oder von diesen Komponenten seitlich umschlossen werden.

Vorteilhaft sind die Permanentmagnete, bezogen auf ihre Magnetisierung, in mindestens einer Komponente des Magnetlagersystems so angeordnet, dass sie im Bereich einer Radiallagerkomponente magnetische Flüsse erzeugen, die alle - radial betrachtet - im Luftspalt entweder nach innen oder nach außen fließen und somit die Basis für den Betrieb eines Unipolmagnetlagers bilden.

Der permanentmagnetische Fluss der Radiallagerkomponente fließt typischerweise über den gesamten Luftspaltumfang in den Rotor oder auch entgegengesetzt.

Für die weiterführende Flussführung können Strecken, die axial durch den Rotor führen oder axial aus der Radiallagerkomponente herausführen beziehungsweise in diese hineinführen, herangezogen werden. Ein Ausführungsbeispiel ist das Unipolmagnetlager.

Gemäß einer weiteren vorteilhaften Ausführungsform sind die Permanentmagnete, bezogen auf ihre Magnetisierung, in mindestens einer Komponente des Magnetlagersystems so angeordnet, dass sie im Bereich einer Radiallagerkomponente magnetische Flüsse erzeugen, die - radial betrachtet - im Luftspalt teilweise nach innen und teilweise nach außen fließen und somit die Basis für den Betrieb eines Multipolmagnetlagers bilden.

Auch bei Multipolmagnetlagern kann die Ausbildung von zusätzlichen axialen Flussführungen vorteilhaft sein, insbesondere im Zusammenhang mit der Axialkrafterzeugung.

Vorteilhaft sind die Permanentmagnete durch entsprechende elektromagnetische Wicklungen, insbesondere durch elektromagnetische Gleichfeldpole ersetzt, die vergleichbare magnetische Flüsse erzeugen.

Durch das Ersetzen der Permanentmagnete durch entsprechende Gleichstromwicklungen ist eine variable Gleichstromvormagnetisierung möglich.

Zu beachten ist, dass die Innenwiderstände einer Permanentmagnetvariante und einer entsprechenden Wicklungsvariante sich im Innenwiderstand unterscheiden. Dies kann Einfluss auf die Flussführung und die Flussausbildung haben.

Vorzugsweise werden die permanentmagnetischen Flüsse oder die äquivalenten elektromagnetischen Flüsse durch eine zusätzliche Gleichstromkomponente der Strangströme des Wicklungssystems der Radiallagerkomponente miterzeugt.

Durch die Überlagerung einer Gleichstromkomponente mit der Steuerstromkomponente kann in einigen Fällen auf eine eigene Gleichstromvormagnetisierung verzichtet werden.

Vorteilhaft weist die Axiallagerkomponente mindestens ein Werkstück, insbesondere ein Werkstück aus ferromagnetischem Material auf, das sowohl mindestens einen verstellbaren axialen elektrischen Steuerfluss als auch mindestens einen permanentmagnetischen Vormagnetisierungsfluss an mindestens einer Stelle, insbesondere an einer gemeinsamen Stelle in den Rotor einleitet, wobei der magnetische Fluss, insbesondere durch axiale Flusskomponenten gebildet wird.

Gemäß einer weiteren vorteilhaften Ausführungsform weist die Radiallagerkomponente mindestens ein Werkstück, insbesondere ein Werkstück aus ferromagnetischem Material auf, das sowohl mindestens einen verstellbaren radialen elektrischen Steuerfluss als auch mindestens einen permanentmagnetischen Vormagnetisierungsfluss an mindestens einer Stelle, insbesondere an einer gemeinsamen Stelle in den Rotor einleitet, wobei der magnetische Fluss, insbesondere durch radiale Flusskomponenten gebildet wird.

Durch die Überlagerung des Vormagnetisierungsflusses mit dem Steuerfluss im Bereich des kraftbildenden Luftspaltes ergibt sich eine wesentlich verbesserte Ausnutzung der Anordnung. Ein weiterer Vorteil ist der reduzierte elektrische Leistungsbedarf und die damit verbundenen reduzierten Elektronikkosten.

Vorteilhaft erfolgt die magnetische Flussführung im Rotor über magnetisch leitfähige, mit der Welle mechanisch verbundene Werkstücke, insbesondere über lamellierte oder massiv ausgeführte oder in einer Kombination daraus ausgebildete Werkstücke wie Blechpakete.

Die Verwendung von für die Flussführung geeigneten ferromagnetischen Werkstücken ist eine vorteilhafte Ausführungsform. Besonders vorteilhaft sind im Hinblick auf eine Reduktion der Eisen- und Wirbelstromverluste lamellierte Rotorteilausführungen oder im Hinblick auf eine dreidimensionale Flussführung Pulververbundwerkstoffe (zum Beispiel Material, bestehend aus kunststoffumhüllten Eisenpulverkernen). Vorteilhaft sind auch massiv ausgeführte Werkstücke oder Kombinationen aus lamellierten und massiv ausgeführten Werkstücken.

Gemäß einer weiteren vorteilhaften Ausführungsform der Erfindung sind die Welle und/oder Zusatzrotorteile aus ferromagnetischem Material ausgebildet und tragen zur magnetischen Flussführung zumindest mit bei.

Eine ferromagnetische Welle kann zur Flussentlastung, zum Beispiel des Rotorblechpaketes mit beitragen, kann aber auch so ausgelegt werden, dass sie den Fluss alleine aufnehmen kann.

Ferromagnetische Zusatzrotorteile können die Flussführung zum Beispiel eines Rotorblechpaketes in eine oder mehrere Richtung verlängern (zum Beispiel axial und/oder radial).

Bei einer weiteren vorteilhaften Ausführungsform setzt sich das Wicklungssystem der Radiallagerkomponente aus vier Strängen zusammen, insbesondere aus Strängen, die orthogonal zueinander angeordnet sind.

Es besteht auch die Möglichkeit, dass sich das Wicklungssystem der Radiallagerkomponente aus drei Strängen zusammensetzt, insbesondere aus Strängen, die in einem Winkel von 120° zueinander angeordnet sind.

Jeder Strang kann aus einer Spule oder mehreren verschalteten Spulen (seriell, parallel oder Kombinationen davon) bestehen.

Die Stränge wiederum können untereinander auch verschaltet oder unverschaltet den Endstufen der Leistungselektronik zugeführt werden.

Vorteilhaft wird jeder Strang von mindestens einem Leistungsschalter oder mindestens einer Halbbrücke angesteuert. Ist eine bifilare Wicklung vorgesehen, das heißt, jeder Wicklung ist eine Stromrichtung zugeordnet, ist für jede bifilare Wicklung wenigstens ein Leistungsschalter, beispielsweise ein Transistor vorgesehen. Die Anordnung von mindestens zwei Halbbrücken beinhaltet auch die Realisierung von Vollbrücken, die von zwei Halbbrücken gebildet werden.

Der magnetische Teil des erfindungsgemäßen Magnetlagersystems setzt sich vorteilhaft aus wenigstens einem Kombilager und wenigstens einem weiteren Lager zusammen. Das wenigstens eine weitere Lager ist vorteilhaft als Radiallager, Axiallager und/oder konisches Lager ausgebildet.

Eine weitere besonders vorteilhafte Ausführungsform sieht vor, dass sich der magnetische Teil des Magnetlagersystems aus zwei Kombilagern zusammensetzt, die jeweils aus wenigstens einer magnetisch verbundenen Axiallagerkomponente und wenigstens einer Radiallagerkomponente bestehen.

Mit den beiden Kombilagern können fünf Freiheitsgrade stabilisiert werden. Der sechste Freiheitsgrad, die Rotation (zum Beispiel die Positions-, Drehzahl- oder Momentensteuerung) wird durch den Antriebsmotor stabilisiert.

Eine weitere vorteilhafte Ausführungsform sieht vor, dass die axialen Steuerflüsse der beiden Kombilager zur Korrektur der axialen Rotorlage durch die Wicklungsströme so eingestellt werden, dass der Steuerfluss des einen Kombilagers den permanentmagnetischen Vormagnetisierungsfluss im axialen Luftspalt dieses Lagers schwächt, während der Steuerfluss des anderen Kombilagers den permanentmagnetischen Vormagnetisierungsfluss im axialen Luftspalt dieses Lagers stärkt oder umgekehrt.

Die Regelung des links- und rechtsseitigen Kombilagers erfolgt vorzugsweise abgestimmt aufeinander.

Gemäß einer weiteren bevorzugten Ausführungsform der Erfindung wird mindestens eine Radiallagerkomponente des Kombilagers entweder durch ein permanentmagnetisch erregtes Multipollager oder durch ein permanentmagnetisch erregtes Unipolmagnetlager gebildet. Neben den permanentmagnetisch unterstützten Lagern können auch rein elektromagnetische Lager eingesetzt werden.

Vorteilhaft ist das Wicklungssystem der Radiallagerkomponente in Stern oder Dreieck verschaltet oder unverschaltet.

Gemäß einer weiteren vorteilhaften Ausführungsform sind die Schenkel mittels Stegen magnetisch miteinander verbunden. Die Stege sind vorzugsweise sehr dünn ausgebildet, um eine magnetische Sättigung zu erreichen.

Sämtliche genannten Ausführungsformen können als Außen- oder Innenläufer ausgebildet sein.

Bei sämtlichen Ausführungsformen besteht die Möglichkeit, dass der Rotor, die Radiallagerkomponente, die Axiallagerkomponente und/oder mechanische Zusatzkomponenten ringförmig oder segmentiert ausgebildet sind. Bei der Axiallagerkomponente können beispielsweise die Schenkel lamelliert ausgebildet sein. Die Komponenten des Rotors, der Radiallagerkomponente, der Axiallagerkomponente und/oder der mechanischen Zusatzkomponenten können geschlossen über den Umfang von 360° ausgebildet sein oder segmentiert mit einem kleineren Winkel als 360°. Bei einer Segmentierung sind die Komponenten entweder magnetisch miteinander verbunden oder über Luftspalte getrennt. Sie können einzeln oder hintereinander liegend über den Umfang verteilt sein, wobei eine gleichmäßige Verteilung besonders vorteilhaft ist.

Elektromagnetische Steuerflüsse können ihr Vorzeichen wechseln und sind zum besseren Verständnis in den Abbildungen durch Magnetkreise mit zweiseitigen Flussrichtungen dargestellt.

Weitere Vorteile und Merkmale der Erfindung ergeben sich anhand der zugehörigen Zeichnung, in der mehrere Ausführungsbeispiele eines erfindungsgemäßen elektrischen Magnetlagers nur beispielhaft dargestellt sind. In der Zeichnung zeigen:
- Fig. 1: ein Radiallager im Querschnitt;
- Fig. 2: ein geändertes Ausführungsbeispiel eines Radiallagers im Querschnitt;
- Fig. 3: ein geändertes Ausführungsbeispiel eines Radiallagers im Querschnitt;
- Fig. 4: ein Kombilager im Längsschnitt;
- Fig. 5: ein geändertes Ausführungsbeispiel eines Kombilagers im Längsschnitt;
- Fig. 6: ein geändertes Ausführungsbeispiel eines Kombilagers im Längsschnitt;
- Fig. 7: ein geändertes Ausführungsbeispiel eines Kombilagers im Längsschnitt;
- Fig. 8: ein Gesamtsystem, bestehend aus zwei Kombilagern und einem Antrieb im Längsschnitt;
- Fig. 9: ein Gesamtsystem auf Basis eines Permanentmagnetflusses im Luftspalt der Radiallagerkomponenten im Längsschnitt;
- Fig. 10: eine Verschaltung der Wicklungen von zwei Kombilagern;
- Fig. 11: eine Einzelansteuerung der Spulen oder Stränge mit Vollbrücken;
- Fig. 12: ein Ausführungsbeispiel eines Radiallagers mit Spulenanordnungen auf den Statorschenkeln im Querschnitt;
- Fig. 13: ein Ausführungsbeispiel eines Radiallagers mit unipolarem Permanentmagnetfluss im Querschnitt;
- Fig. 14: eine Ausführungsvariante eines Radiallagers mit unipolarem Permanentmagnetfluss mit vier Spulen im Querschnitt;
- Fig. 15: ein geändertes Ausführungsbeispiel eines Kombilagers im Querschnitt;
- Fig. 16a und Fig. 16b: eine Darstellung der Überlagerung der permanentmagnetischen und der elektromagnetischen Flusskomponente am Beispiel eines Axiallagers;
- Fig. 17: ein geändertes Ausführungsbeispiel eines Kombilagers im Längsschnitt;
- Fig. 18: ein geändertes Ausführungsbeispiel eines Kombilagers im Längsschnitt;
- Fig. 19: ein geändertes Ausführungsbeispiel eines Radiallagers mit durch Stegen verbundenen Schenkeln im Querschnitt.

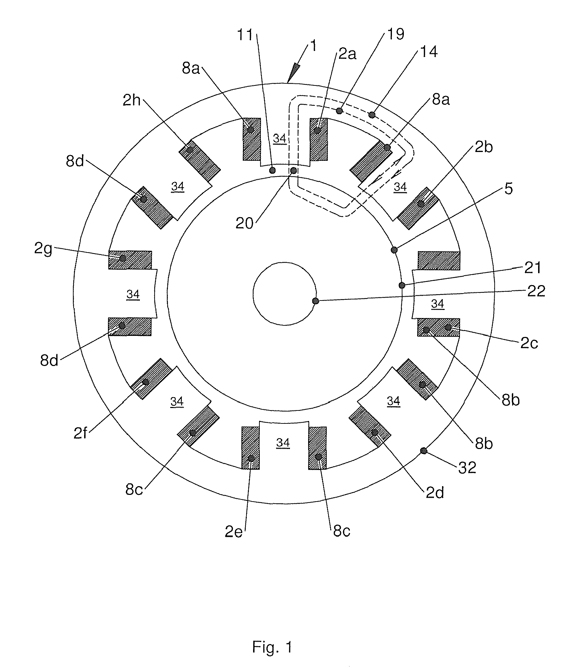

Fig. 1 zeigt eine Radiallagerkomponente (1), welche auf einem rein elektromagnetischen Prinzip basiert. Die Radiallagerkomponente (1) weist ein Wicklungssystem (2), bestehend aus den Spulenwicklungen (2a, 2b, 2c, 2d, 2e, 2f, 2g, 2h) mit den Wicklungssträngen (8a, 8b, 8c, 8d) auf.

In dem Radiallager (1) ist ein Rotor (5) mit einer Welle (22) gelagert. Der Rotor (5) weist darüber hinaus ein Rotorblechpaket (21) auf. Polschenkel (34) tragen die Wicklungen (2a bis 2h) des Wicklungssystems (2). Die Polschenkel (34) sind Teil eines ferromagnetischen Werkstückes (32) zur Leitung des Permanentmagnetflusses und des elektromagnetischen Flusses.

Das Wicklungssystem (2) weist die dargestellten Steuerwicklungen auf. Es existieren die Betriebsvarianten:
a) nur Steuerströme/-spannungen sind in den Wicklungen eingeprägt;
b) Steuerströme/-spannungen mit überlagerter Gleichstromkomponente.

Durch die Schenkel wird ein Permanentmagnetfluss (14) zur Vormagnetisierung von Luftspalten beziehungsweise ein äquivalenter elektromagnetischer Gleichstromfluss geleitet. Der Permanentmagnetfluss (14) beziehungsweise der elektromagnetische Gleichstromfluss werden durch eine Flusseinleitestelle (20) in den Rotor (5) geleitet. Mit (19) ist ein radialer elektromagnetischer Steuerfluss bezeichnet.

Es besteht auch die Möglichkeit, das Wicklungssystem mit Steuerwicklungen und eigens angebrachten zusätzlichen Gleichstromvormagnetisierungswicklungen (nicht dargestellt) zu realisieren. Sowohl die Steuer- als auch die Gleichstromwicklungen sind auf den Polschenkeln (34) montiert. Nicht dargestellt ist eine weitere Variante mit gesonderten Schenkeln für Gleichstrom- und Steuerwicklungen.

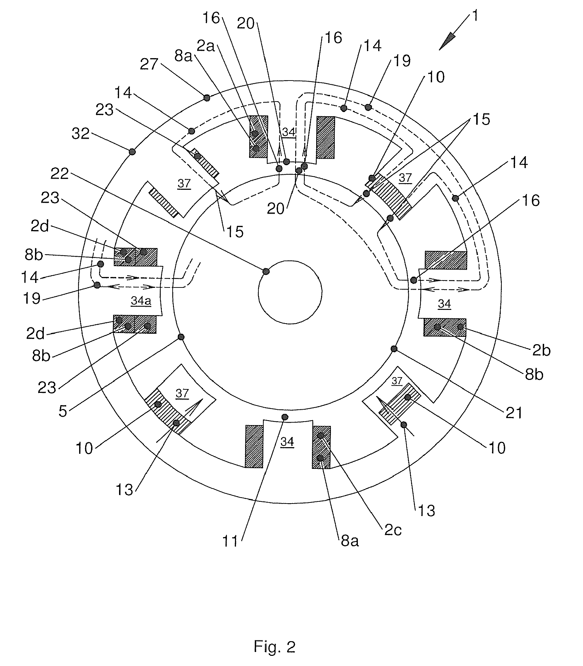

Fig. 2 zeigt das Radiallager (1), basierend auf dem elektromagnetischen und permanentmagnetischen Prinzip. Das Radiallager (1) weist neben den Wicklungen (2a bis 2d) tragenden Polschenkeln (34) weitere Polschenkel (37) auf, in oder an denen Permanentmagnete (10) angeordnet sind. In Fig. 2 sind verschiedene Anordnungsmöglichkeiten der Permanentmagnete (10) in oder an den Polschenkeln (37) dargestellt. Die Flussrichtung (15) des Vormagnetisierungsflusses (14) in den die Permanentmagneten (10) tragenden Polschenkeln (37) ist umgekehrt zur Flussrichtung (16) in den Polschenkeln (34) mit den Steuerwicklungen (8a, 8b). Das Radiallager (1) ist also als Multipollager (27) ausgebildet. Zum permanentmagnetischen Vormagnetisierungsfluss (14) wird im Luftspaltbereich (20) der Steuerschenkel (34) der Steuerfluss überlagert. Damit ist ausgehend von einem durch den Vormagnetisierungsfluss (14) vorgegebenen Arbeitspunkt, abhängig vom Vorzeichen und der Amplitude des Steuerflusses, eine Erhöhung beziehungsweise eine Reduktion des Luftspaltflusses und damit eine Radialkraftregelung möglich.

Der Permanentmagnetersatzfluss kann auch durch entsprechende Gleichstromwicklungen (23) (Permanentmagnetersatzwicklungen) erzeugt werden. Dem elektromagnetischen Steuerfluss kann eine elektromagnetische Gleichflusskomponente überlagert sein (realisiert über eine Steuer- und Gleichkomponente des Stromes).

Die Permanentmagnete (10) sind in Ausschnitten des Statorblechpaketes (32) eingesetzt (seitliche Sättigungsstege). Eine Alternative sind Eisenpolschuhe oder Permanentmagnete direkt am Luftspalt (11).

An dem Polschenkel (34a) ist ein weiteres Ausführungsbeispiel mit einer Permanentmagnetersatzwicklung (23) und der Spulenwicklung (2d) gezeigt mit dem entsprechenden Permanentmagnetfluss (14) und dem radialen elektromagnetischen Steuerfluss (19).

Die Polschuhe (37), in denen die Permanentmagnete (10) angeordnet sind, weisen eine Magnetisierungsrichtung (13) auf.

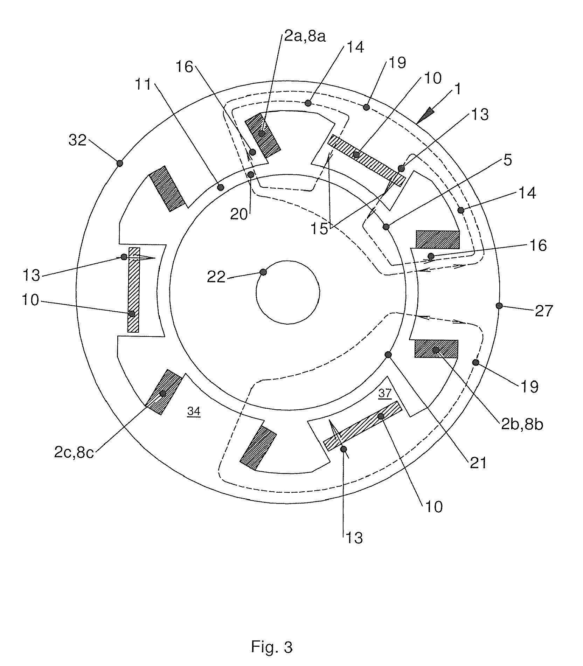

Fig. 3 zeigt das Radiallager (1) mit Polschenkeln (34, 37). In den Polschenkeln (37) sind wiederum Permanentmagnete (10) angeordnet, und die Polschenkel (34) tragen die Wicklungen (2a, 2b, 2c). Das Radiallager (1) ist als Multipolmagnetlager (27) ausgebildet. Durch die Anordnung der Permanentmagnete (10) und der Wicklungsstränge (8a, 8b, 8c) ist der in Fig. 3 dargestellte radiale elektromagnetische Steuerfluss (19) sowie der Permanentmagnetfluss (14) vorhanden. Es ist eine Kopplung zwischen den Regelungen der Position in den orthogonalen Hauptachsen vorhanden.

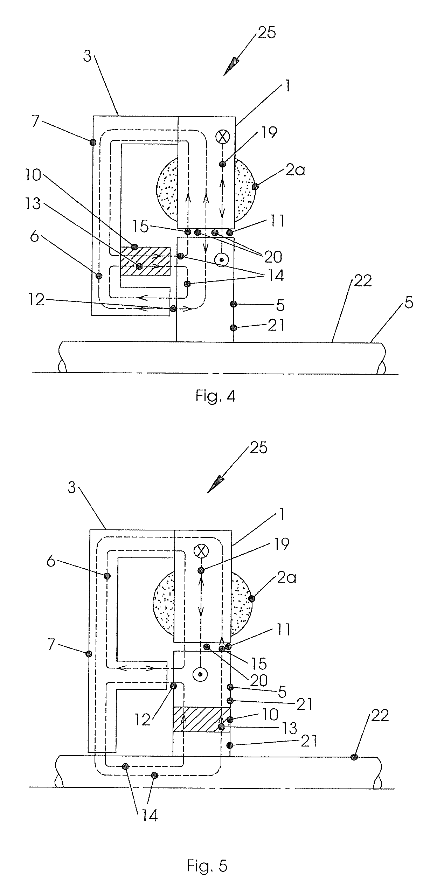

Fig. 4 zeigt ein Kombilager (25) mit der Radiallagerkomponente (1) und einer Axiallagerkomponente (3).

Flüsse (6) zur Axiallagerung verlaufen hauptsächlich in Ebenen, aufgespannt durch radiale Strahlen und eine Axialachse, Flüsse (19) zur Radiallagerung verlaufen hauptsächlich in dazu orthogonalen Ebenen.

Die permanentmagnetischen Flüsse (14) magnetisieren einen Axialluftspalt (12) und den Radialluftspalt (11) vor. Die Wicklungen (2a) sind lediglich in der Radiallagerkomponente (1) vorhanden. Die Axiallagerkomponente (3) weist einen Permanentmagneten (10) auf. Die Axiallagerkomponente (3) ist wicklungsfrei ausgebildet.

Die Axiallagerkomponente (3) kann zum Beispiel aus Fertigungsgründen auch aus mehreren ferromagnetischen leitfähigen Teilen aufgebaut sein.

Die Radiallagerkomponente (3) und der Rotor (5) sind vorzugsweise geblecht.

Die Magnetisierungsrichtung des Permanentmagnetmaterials (10) ist vorzugsweise axial ausgerichtet.

Die Ausführungsform des Permanentmagneten (10) kann zum Beispiel als Ring, als Einzelblöcke oder als Einzelsegmente ausgebildet sein, die vorzugsweise kreisförmig angeordnet sind.

Es sind drei Steuerflusshauptkomponenten in den Luftspalten (11, 12) vorhanden, und zwar eine Axiallagerkomponente und zwei orthogonale Radiallagerkomponenten.

Fig. 5 zeigt ein Kombilager (25) mit einer Axiallagerkomponente (3) und einer Radiallagerkomponente (1).

Bei diesem Ausführungsbeispiel ist der Permanentmagnet (10) in dem Rotor (5) angeordnet. Es wird ein Teil des Permanentmagnetflusses (14) über den Luftspalt (12) zwischen dem Rotor (5) und der Axiallagerkomponente (3) sowie zwischen der Welle (22) und der Axiallagerkomponente (3) rückgeführt, sofern die Welle (22) magnetisch leitfähig ist. Ist die Welle (22) nicht magnetisch leitfähig, ist die Anordnung eines ferromagnetischen Wellenaufsatzes (nicht dargestellt) vorteilhaft.

Die Magnetisierungsrichtung des Permanentmagnetmaterials (10) ist vorzugsweise radial oder diametral.

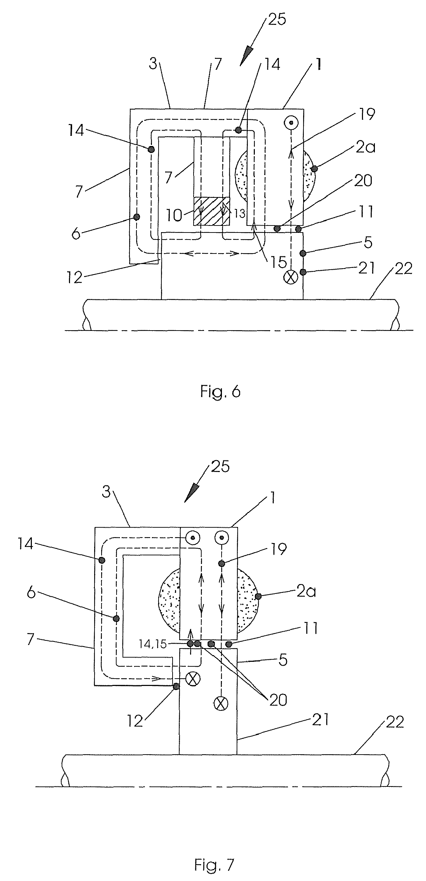

Fig. 6 zeigt die Anordnung des Permanentmagneten (10) in einem Teil (7) der Axiallagerkomponente (3). Das Teil (7) ist als ferromagnetisches Werkstück zur Leitung des Permanentmagnetflusses (14) und des elektromagnetischen Flusses (6) ausgebildet.

Der Permanentmagnet (10) kann auch mit einem Polschuh (nicht dargestellt) ausgestattet sein oder in einer Tasche (nicht dargestellt) in der Axiallagerkomponente (3) angeordnet sein.

Fig. 7 zeigt das Kombilager (25) mit der Axiallagerkomponente (3) und der Radiallagerkomponente (1). Gemäß Fig. 7 ist ein Permanentmagnet (10) nicht vorgesehen. Es ist beispielsweise auch möglich, einen oder mehrere Permanentmagnete (10) in der Radiallagerkomponente (1) (nicht dargestellt) anzuordnen. Es besteht darüber hinaus die Möglichkeit, teilweise eine dreidimensionale Flussführung des permanentmagnetischen Flusses (14) vorzusehen. Diese dreidimensionale Flussführung ist jedoch nicht zwingend erforderlich.

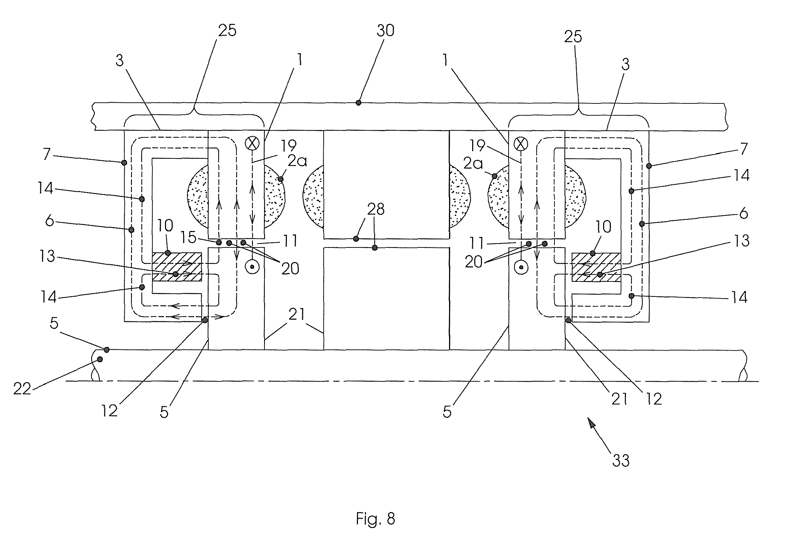

Fig. 8 zeigt die Anordnung eines aus zwei Kombilagern (25) bestehenden Gesamtsystems (33). Die Kombilager (25) sind in einem Gehäuse (30) angeordnet. Darüber hinaus ist ein Antrieb (28) vorgesehen. Der Antrieb (28) kann auch durch einen Generator ersetzt werden.

Die Steuerflüsse (6) sind zur Regelung der Axiallage axial einstellbar. Vorzugsweise bei Schwächung des linksseitigen Flusses wird eine Stärkung des rechtsseitigen Flusses vorgenommen und umgekehrt. Entscheidend ist hierbei der Absolutbetrag des überlagerten Flusses, da die Magnetkraft sich näherungsweise aus dem Quadrat des Flusses bestimmt. Die Bewegung des Rotors erfolgt in Richtung der Seite mit dem stärkeren Fluss, sofern keine äußere Kraft entgegenwirkt.

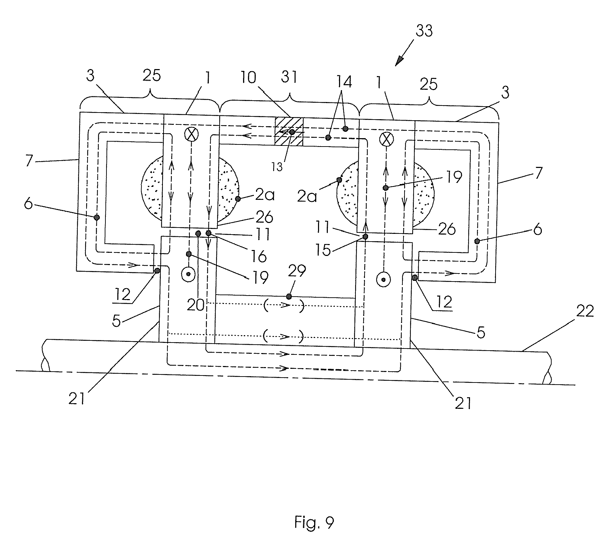

Fig. 9 zeigt ein weiteres Ausführungsbeispiel eines Gesamtsystems (33) mit zwei Kombilagern (25) und einer zwischen den Kombilagern (25) angeordneten, zur Flussführung dienenden Zusatzkomponente (31). In der Zusatzkomponente (31) ist der Permanentmagnet (10) angeordnet mit der eingezeichneten Magnetisierungsrichtung (13). Das in der Fig. 9 dargestellte Gesamtsystem (33) basiert auf einem unipolaren Permanentmagnetfluss (14) im Luftspalt (11) des Radiallagers (1). Bei der linken Radiallagerkomponente (1) strömt der Permanentmagnetfluss (14) über den gesamten Luftspalt (11) nach innen zum Rotor (5). Bei der rechten Radiallagerkomponente (1) strömt der Permanentmagnetfluss (14) über den gesamten Luftspalt (11) nach außen vom Rotor (5) weg. Die Flussführung erfolgt über die Welle (22) oder über ein zusätzliches Flussleitstück (29), welches jedoch nicht zwingend vorgesehen ist.

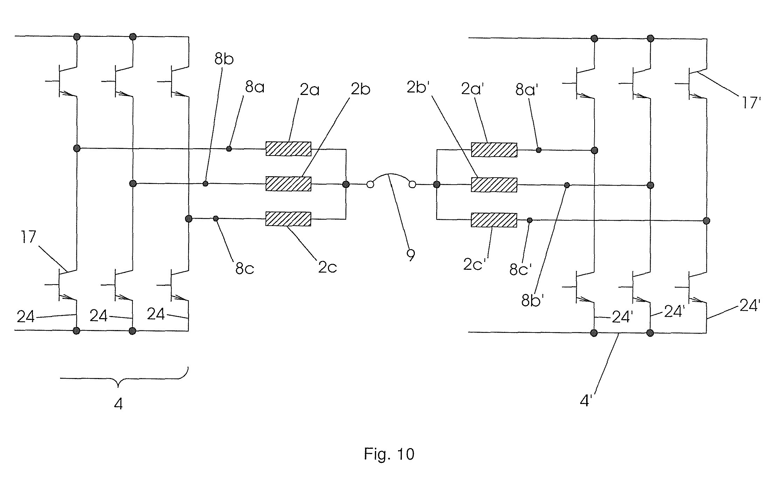

Fig. 10 zeigt eine Ausführungsform für eine Verschaltung der Wicklungen (8a, 8b, 8c) von zwei Kombilagern. Zwischen den beiden Wicklungssystemen (8a, 8b, 8c; 8a', 8b', 8c') ist eine elektrische Verbindung (9) vorgesehen. Ein Ausgleichsstrom ist verwendbar für die Steuerung der Axialflüsse. Jedes Kombilager weist eine Signal- und Leistungselektronik (4, 4') auf. Die Leistungselektronik (4, 4') weist Leistungsschalter (17, 17') auf. Als Leistungsteile können zum Beispiel Halbbrücken, bestückt mit Leistungshalbleitern, zum Beispiel IGBTs, MOSFETs, Bipolartransistoren oder dergleichen verwendet werden. Wegen der besseren Übersicht sind Freilaufdioden-, Treiber- und Schutzbeschaltung, Zwischenkreisstabilisierungen und dergleichen in Fig. 10 nicht eingezeichnet.

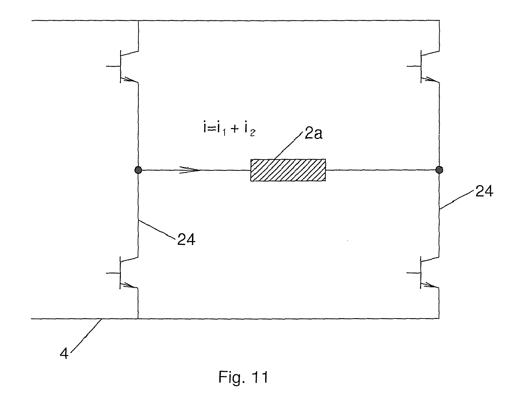

Fig. 11 zeigt eine Einzelansteuerung der Spulen oder Stränge (2a) mit Vollbrücken. Die Signal- und Leistungselektronik (4) setzt sich aus zwei Halbbrücken (24) zusammen. Der Spulen-/Strangstrom kann sich aus mehreren Komponenten zusammensetzen, beispielsweise aus Komponenten für die Stabilisierung der radialen Freiheitsgrade, des axialen Freiheitsgrades zur Linearisierung der (Regler-) Arbeitspunkte und so weiter.

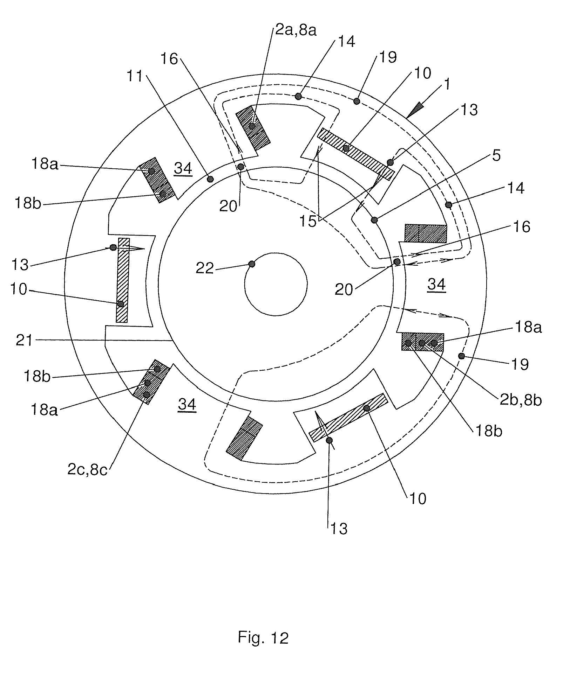

Fig. 12 zeigt ein Radiallager (1), welches einen ähnlichen Aufbau wie in Fig. 3 hat, jedoch mit mehreren Spulenanordnungen (18a, 18b) auf den Statorschenkeln (34), zum Beispiel für das zusätzliche Anbringen von Spulen zur Erzeugung eines Gleich- oder Vormagnetisierungsflusses.

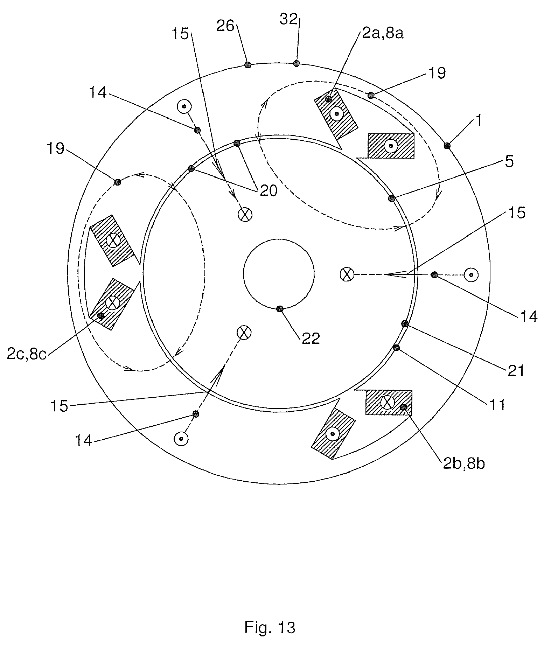

Fig. 13 zeigt das als Unipolmagnetlager (26) ausgebildete Radiallager (1) mit einem unipolaren Permanentmagnetfluss (14). Der Permanentmagnetfluss (14) kommt axial in das Statorpaket hinein und strömt durch die Steuerspulschenkel (34) von allen Seiten in den Rotor (5) radial hinein. Die Rückführung erfolgt axial über den Rotor (5) oder die Welle (22). Die Steuerflüsse weisen variable Amplituden und Vorzeichen auf.

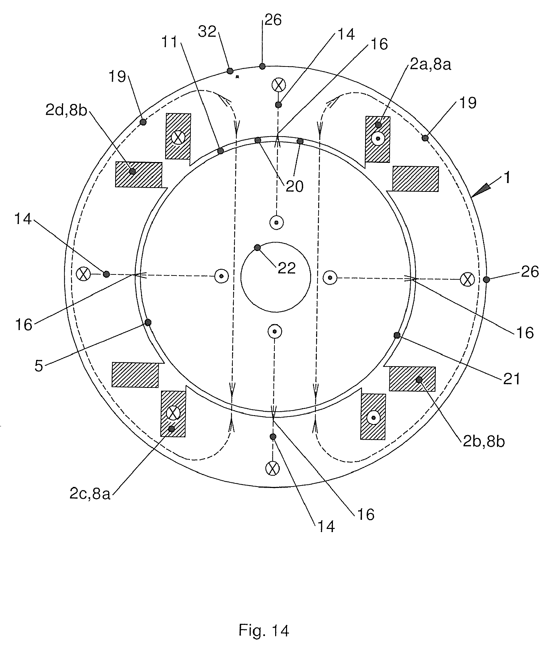

Fig. 14 zeigt ein Radiallager (1) mit einem ähnlichen Aufbau wie das Radiallager gemäß Fig. 13. Gemäß Fig. 14 sind jedoch vier Spulen (2a, 2b, 2c, 2d) vorgesehen.

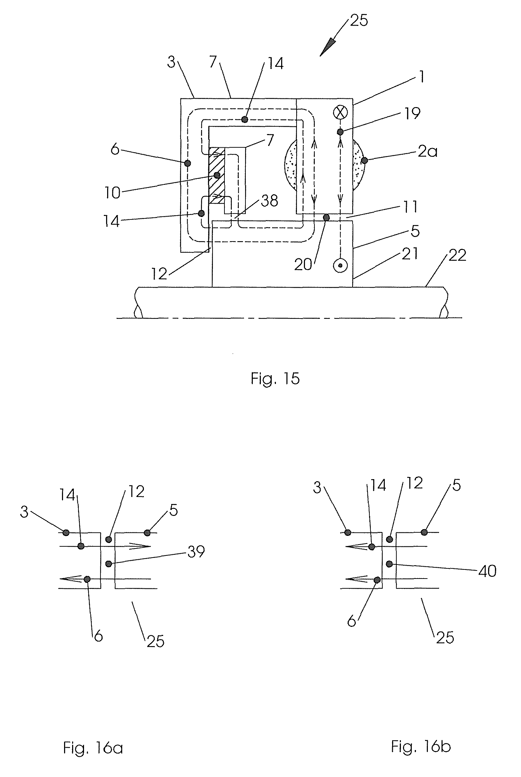

Fig. 15 zeigt ein Kombilager (25) mit einer Axiallagerkomponente (3) und Radiallagerkomponente (1). Der Permanentmagnet (10) ist in der Axiallagerkomponente (3) angeordnet. Die Flusseinleitung des permanentmagnetischen Flusses (14) erfolgt radial über den Rotorluftspalt (38).

Die Fig. 16a und 16b zeigen eine Darstellung der Überlagerung der permanentmagnetischen Flusskomponente (14) und der elektromagnetischen Flusskomponente (6) am Beispiel des Axiallagers (3). In Fig. 16a ist eine Flussschwächung, in Fig. 16b eine Flussverstärkung dargestellt. Die axialen Steuerflüsse (6) der beiden Kombilager (25) sind zur Korrektur der axialen Rotorlage durch die Wicklungsströme so eingestellt, dass der Steuerfluss (6) des Kombilagers (25) gemäß Fig. 16a als ein den permanentmagnetischen Vormagnetisierungsfluss (14) im axialen Luftspalt (12) dieses Lagers schwächender Steuerfluss (39) ausgebildet ist, während der Steuerfluss (6) des Kombilagers (25) gemäß Fig. 16b als ein den permanentmagnetischen Vormagnetisierungsfluss (14) im axialen Luftspalt (12) dieses Lagers stärkender Steuerfluss (40) ausgebildet ist. Die resultierende Zugkraft am Rotor (5) erfolgt nach rechts.

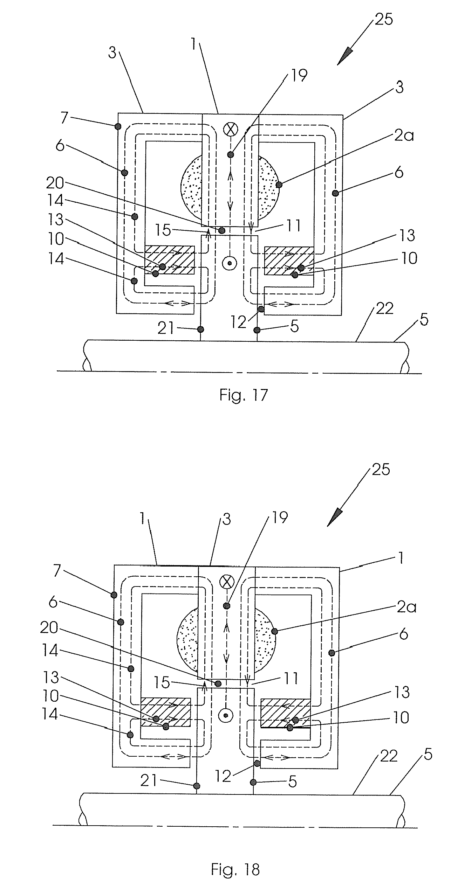

Fig. 17 zeigt ein Kombilager (25) mit einer Radiallagerkomponente (1) mit beidseitigen Axiallagerkomponenten (3).

Fig. 18 zeigt ein Kombilager (25), bestehend aus einer Radiallagerkomponente (3) mit beidseitigen Axiallagerkomponenten (1). Im Vergleich zu Fig. 17 liegt eine geänderte Magnetisierungsrichtung der Permanentmagnete (10) vor.

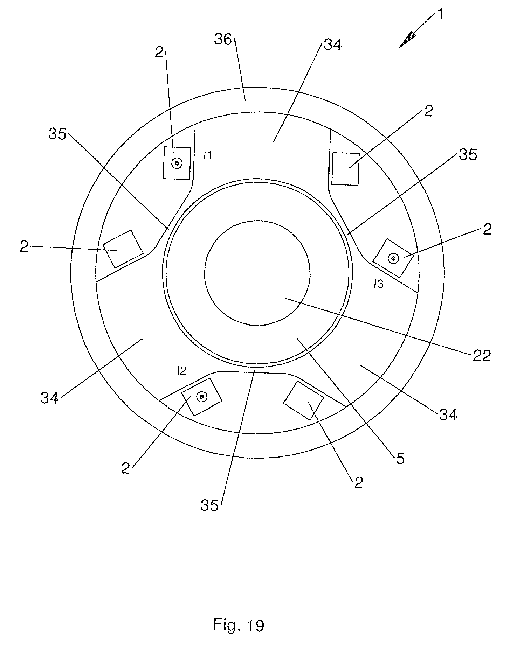

Fig. 19 zeigt eine Radiallagerkomponente (1) mit Polschenkeln (34), die über Stege (35) magnetisch miteinander verbunden sind. Die Stege (35) sind relativ dünn ausgebildet, um eine magnetische Sättigung zu erreichen.

Die Anzahl der Schenkel (34) ist n ≥ 1 (n = ganze Zahl). Ist lediglich ein Schenkel vorgesehen, so müssen mehrere Komponenten hintereinander liegend und in Bezug auf die Schenkellage versetzt zueinander angeordnet werden, um die erforderliche Gesamtsymmetrie zu erhalten. Vorzugsweise sind jedoch drei oder vier Schenkel (34) vorgesehen.

Die Anordnung der Stege (35) hat den Vorteil, dass die üblicherweise zwischen den Nutlücken und den Polschenkeln variierende Flussdichte im Luftspalt verringert wird. Hierdurch werden die Verluste, die bei der Rotordrehung auftreten, verringert. Die Stege (35) müssen so dünn ausgebildet sein, dass eine magnetische Sättigung auftritt und ein Kurzschlussfluss begrenzt ist.

Sämtliche dargestellten Ausführungsformen können als Außen- oder Innenläufer ausgebildet sein.

Gemäß Fig. 4 ist der Magnet (10) angeordnet. In dem Luftspalt im Bereich des Magneten (10) ist ausschließlich ein permanentmagnetischer Fluss vorhanden. Ein elektromagnetischer Fluss ist in diesem Luftspalt nicht vorhanden.

In den Luftspalten (12, 15) erfolgt eine Zusammenführung des permanentmagnetischen Flusses (14) und des elektromagnetischen Flusses (19). Der Luftspalt im Bereich des Permanentmagneten (10), in dem ausschließlich ein permanentmagnetischer Fluss vorhanden ist, bildet eine Ebene, die senkrecht zu der Welle (22) angeordnet ist.

In Fig. 6 ist der Magnet (10) derart angeordnet, dass der Luftspalt, in dem ausschließlich ein permanentmagnetischer Fluss (14) vorhanden ist, tangential zur Welle (22) angeordnet ist.

Prinzipiell besteht auch die Möglichkeit, dass der Luftspalt nicht in einer Normalenrichtung oder tangential zur Welle (22) angeordnet ist. Neben den in den Figuren dargestellten zwei Richtungen können auch andere Richtungen vorgesehen sein, die durch eine andere Außenbegrenzung des Permanentmagneten (10) und der Welle (22) beziehungsweise des Rotors (5) gegeben ist. Diese Außenbegrenzung kann beispielsweise konisch, stufenförmig oder wellenförmig ausgebildet sein. Diese veränderte Form der Außenbegrenzung kann natürlich auch bei den Luftspalten Anwendung finden, in denen eine Zusammenführung des permanentmagnetischen Flusses (14) mit dem elektromagnetischen Fluss (19) stattfindet.

### Bezugszahlen

- 1: Radiallagerkomponente
- 2: Wicklungssystem
- 2a bis 2h: Wicklungen
- 3: Axiallagerkomponente
- 4: Signal- und Leistungselektronik
- 4': Signal- und Leistungselektronik
- 5: Rotor
- 6: axialer elektromagnetischer Steuerfluss
- 7: ferromagnetisches Werkstück der Axiallagerkomponente (3) zur Leitung des Permanentmagnetflusses und des elektromagnetischen Flusses
- 8a bis 8d: Wicklungsstrang
- 8a', 8b', 8c': Wicklungsstrang
- 9: elektrische Verbindung zwischen den Wicklungssystemen der Radiallagerkomponente (1)
- 10: Permanentmagnet
- 11: Luftspalt des Radiallagers
- 12: Luftspalt des Axiallagers
- 13: Magnetisierungsrichtung des Permanentmagneten
- 14: Permanentmagnetfluss zur Vormagnetisierung der Luftspalte beziehungsweise äquivalenter elektromagnetischer Gleichstromfluss
- 15: Richtung nach innen (radial gesehen)
- 16: Richtung nach außen (radial gesehen)
- 17: Leistungsschalter
- 17': Leistungsschalter
- 18: getrennte Wicklungen zur Erzeugung des Radial- und Axialflusses
- 18a, 18b: Spulenanordnungen
- 19: radialer elektromagnetischer Steuerfluss
- 20: Flusseinleitestelle in den Rotor
- 21: Rotorblechpaket
- 22: Welle
- 23: Permanentmagnetersatzwicklung
- 24: Halbbrücke
- 25: Kombilager
- 26: Unipolmagnetlager
- 27: Multipolmagnetlager
- 28: Motor oder Generator
- 29: Flussleitstück
- 30: Gehäuse
- 31: zur Flussführung dienende Zusatzkomponente
- 32: ferromagnetisches Werkstück der Radiallagerkomponente (1) zur Leitung des Permanentmagnetflusses und des elektromagnetischen Flusses
- 33: Gesamtsystem
- 34: Polschenkel
- 34a: Polschenkel
- 35: Stege
- 36: Ring
- 37: Polschenkel
- 38: Rotorluftspalt
- 39: Steuerfluss
- 40: Steuerfluss

## Patentansprüche

1. Elektrisches Magnetlagersystem, bestehend aus mindestens einer Radiallagerkomponente (1) mit mindestens einem ein- oder mehrsträngigen Wicklungssystem (2), mindestens einer Axiallagerkomponente (3), die mit mindestens einer Radiallagerkomponente (1) in magnetischer Verbindung steht, einem zumindest in Teilen ferromagnetischem Rotor (5) und mindestens einer Signal- und Leistungselektronik (4),
**dadurch gekennzeichnet , dass** die Axiallagerkomponente (3), die zur aktiven Regelung der Axiallage des Rotors (5) dient, wicklungsfrei ausgeführt ist und die Axiallagerung durch das Wicklungssystem (2) der Radiallagerkomponente (1) erzielbar ist.

2. Elektrisches Magnetlagersystem nach Anspruch 1, **dadurch gekennzeichnet, dass** der für die aktive Regelung der Axiallage des Rotors (5) benötigte axiale elektromagnetische Steuerfluss (6) als ein von mindestens einem Strang eines oder mehrerer Radiallagerkomponenten (1) erzeugter und über mindestens ein magnetisch leitfähiges Werkstück (7) der Axiallagerkomponente (3) geführter Steuerfluss (6) ausgebildet ist.

3. Elektrisches Magnetlagersystem nach einem der vorhergehenden Ansprüche, **dadurch gekennzeichnet, dass** mindestens ein Wicklungsstrang (8a bis 8d) des Wicklungssystems (2) der Radiallagerkomponente (1) als ein einen Strom führender Wicklungsstrang (8a bis 8d) ausgebildet ist, wobei der Strom als ein aus mindestens einem Steuersignal resultierender Strom ausgebildet ist, und dass das Steuersignal als ein sich aus Teilkomponenten zusammensetzendes oder ein sich analytisch in solche zerlegbares Steuersignal ausgebildet ist.

4. Elektrisches Magnetlagersystem nach Anspruch 3, **dadurch gekennzeichnet, dass** mindestens eines der Steuersignale als ein sich aus einer Komponente zur Beeinflussung der Radiallage und/oder einer Komponente zur Beeinflussung der Axiallage des Rotors (5) zusammensetzendes oder in diese zerlegbares Steuersignal ausgebildet ist.

5. Elektrisches Magnetlagersystem nach Anspruch 4, **dadurch gekennzeichnet, dass** mindestens eines der Steuersignale als ein sich aus einer Komponente zur Beeinflussung der Radiallage und/oder einer Komponente zur Beeinflussung der Axiallage des Rotors (5) und aus einer oder mehreren Zusatzkomponenten des elektrischen Steuersignales zusammensetzendes oder in diese zerlegbares Steuersignal ausgebildet ist.

6. Elektrisches Magnetlagersystem nach einem der vorhergehenden Ansprüche, **dadurch gekennzeichnet, dass** der Fluss zur Beeinflussung der Radiallage und/oder der Fluss zur Beeinflussung der Axiallage des Rotors (5) als ein durch getrennte an der Radiallagerkomponente (1) angebrachte Wicklungen (18) erzeugter Fluss ausgebildet ist.

7. Elektrisches Magnetlagersystem nach einem der vorhergehenden Ansprüche, **dadurch gekennzeichnet, dass** die Stromsumme der an die Leistungselektronik angeschlossenen Wicklungsstränge (8a bis 8d) der Radiallagerkomponente (1) ungleich null ist.

8. Elektrisches Magnetlagersystem nach einem der vorhergehenden Ansprüche, **dadurch gekennzeichnet, dass** die Wicklungssysteme (2) der Radiallagerkomponente (1) über mindestens eine elektrische Verbindung (9) zusammengeschlossen sind und eine Stromführung zwischen diesen Teilen erzielbar ist.

9. Elektrisches Magnetlagersystem nach einem der vorhergehenden Ansprüche, **dadurch gekennzeichnet, dass** mindestens eine Radiallagerkomponente (1) mit mindestens einem Permanentmagneten (10) bestückt ist, der als ein mindestens einen Luftspalt (11, 12) der Radiallagerkomponente (1) und/oder der Axiallagerkomponente (3) vormagnetisierender Permanentmagnet (10) ausgebildet ist.

10. Elektrisches Magnetlagersystem nach einem der vorhergehenden Ansprüche, **dadurch gekennzeichnet, dass** mindestens eine Axiallagerkomponente (3) mit mindestens einem Permanentmagneten (10) bestückt ist, der als ein mindestens einen Luftspalt (11, 12) der Radiallagerkomponente (1) und/oder der Axiallagerkomponente (3) vormagnetisierender Permanentmagnet (10) ausgebildet ist.

11. Elektrisches Magnetlagersystem nach einem der vorhergehenden Ansprüche, **dadurch gekennzeichnet, dass** der Rotor (5) mit mindestens einem Permanentmagneten (10) bestückt ist, der als ein mindestens einen Luftspalt (11, 12) der Radiallagerkomponente (1) und/oder der Axiallagerkomponente (3) vormagnetisierender Permanentmagnet (10) ausgebildet ist.

12. Elektrisches Magnetlagersystem nach einem der vorhergehenden Ansprüche, **dadurch gekennzeichnet, dass** mindestens eine zur Flussführung dienende Zusatzkomponente (31) mit mindestens einem Permanentmagneten (10) bestückt ist, der als ein mindestens einen Luftspalt (11, 12) der Radiallagerkomponente (1) und/oder der Axiallagerkomponente (3) vormagnetisierender Permanentmagnet (10) ausgebildet ist.

13. Elektrisches Magnetlagersystem nach einem der vorhergehenden Ansprüche, **dadurch gekennzeichnet, dass** die Permanentmagnete (10), bezogen auf ihre Magnetisierung (13) in mindestens einer Komponente des Magnetlagersystems so angeordnet sind, dass sie als im Bereich einer Radiallagerkomponente (1) magnetische Flüsse (14) erzeugende Permanentmagnete (10) ausgebildet sind, wobei sämtliche magnetischen Flüsse (14) als - radial betrachtet - im Luftspalt (11) entweder nach innen (15) oder nach außen (16) fließende Flüsse (14) ausgebildet sind.

14. Elektrisches Magnetlagersystem nach einem der vorhergehenden Ansprüche, **dadurch gekennzeichnet, dass** die Permanentmagnete (10), bezogen auf ihre Magnetisierung (13), in mindestens einer Komponente des Magnetlagersystems so angeordnet sind, dass sie als im Bereich einer Radiallagerkomponente (1) magnetische Flüsse (14) erzeugende Permanentmagnete (10) ausgebildet sind, wobei die Flüsse (14) - radial betrachtet - als im Luftspalt (11) teilweise nach innen (15) und teilweise nach außen (16) fließende Flüsse (14) ausgebildet sind.

15. Elektrisches Magnetlagersystem nach einem der vorhergehenden Ansprüche, **dadurch gekennzeichnet, dass** anstelle der Permanentmagnete (10) entsprechende elektromagnetische Wicklungen (23) vorgesehen sind.

16. Elektrisches Magnetlagersystem nach Anspruch 15, **dadurch gekennzeichnet, dass** anstelle der Permanentmagnete (10) elektromagnetische Gleichfeldpole, die als vergleichbare magnetische Flüsse (14) erzeugende Gleichfeldpole ausgebildet sind, vorgesehen sind.

17. Elektrisches Magnetlagersystem nach einem der vorhergehenden Ansprüche, **dadurch gekennzeichnet, dass** die permanentmagnetischen Flüsse (14) und/oder die äquivalenten elektromagnetischen Flüsse (19) als durch eine zusätzliche Gleichstromkomponente der Strangströme des Wicklungssystems (2) der Radiallagerkomponente (1) miterzeugte Flüsse (14) ausgebildet sind.

18. Elektrisches Magnetlagersystem nach einem der vorhergehenden Ansprüche, **dadurch gekennzeichnet, dass** die Axiallagerkomponente (3) mindestens ein Werkstück (7) aufweist, das als ein sowohl mindestens einen verstellbaren axialen elektrischen Steuerfluss (6) als auch mindestens einen permanentmagnetischen Vormagnetisierungsfluss (14) an mindestens einer Stelle (20) in den Rotor (5) einleitendes Werkstück (7) ausgebildet ist.

19. Elektrisches Magnetlagersystem nach einem der vorhergehenden Ansprüche, **dadurch gekennzeichnet, dass** die Radiallagerkomponente (1) mindestens ein Werkstück (32) aufweist, das als ein sowohl mindestens einen verstellbaren radialen elektrischen Steuerfluss (19) als auch mindestens einen permanentmagnetischen Vormagnetisierungsfluss (14) an mindestens einer Stelle (20) in den Rotor (5) einleitendes Werkstück (32) ausgebildet ist.

20. Elektrisches Magnetlagersystem nach Anspruch 18 oder 19, **dadurch gekennzeichnet, dass** die Axiallagerkomponente (3) und/oder Radiallagerkomponente (1) mindestens ein Werkstück (7, 32) aus ferromagnetischem Material aufweist.

21. Elektrisches Magnetlagersystem nach Anspruch 18 oder 19, **dadurch gekennzeichnet, dass** das Werkstück (32) als ein sowohl mindestens einen verstellbaren radialen elektrischen Steuerfluss (19) als auch mindestens einen permanentmagnetischen Vormagnetisierungsfluss (14) an einer gemeinsamen Stelle (20) in den Rotor (5) einleitendes Werkstück (17, 32) ausgebildet ist.

22. Elektrisches Magnetlagersystem nach einem der vorhergehenden Ansprüche, **dadurch gekennzeichnet, dass** die magnetische Flussführung als eine im Rotor (5) über magnetisch leitfähige, mit der Welle mechanisch verbundene Werkstücke (21) erfolgende Flussführung ausgebildet ist.

23. Elektrisches Magnetlagersystem nach einem der vorhergehenden Ansprüche, **dadurch gekennzeichnet, dass** die magnetische Flussführung als eine im Rotor (5) über lamellierte oder massiv ausgeführte oder in einer Kombination daraus ausgebildete Werkstücke erfolgt.

24. Elektrisches Magnetlagersystem nach einem der vorhergehenden Ansprüche, **dadurch gekennzeichnet, dass** die Welle (22) und/oder Zusatzrotorteile (29) aus ferromagnetischem Material und als zur magnetischen Flussführung zumindest mit beitragende Welle (22) und/oder Zusatzrotorteile (29) ausgebildet sind.

25. Elektrisches Magnetlagersystem nach einem der vorhergehenden Ansprüche, **dadurch gekennzeichnet, dass** das Wicklungssystem (2) der Radiallagerkomponente (1) aus vier Strängen (8a bis 8d) gebildet ist.

26. Elektrisches Magnetlagersystem nach Anspruch 25, **dadurch gekennzeichnet, dass** das Wicklungssystem (2) der Radiallagerkomponente (1) aus vier orthogonal zueinander angeordneten Strängen (8a bis 8d) gebildet ist.

27. Elektrisches Magnetlagersystem nach einem der vorhergehenden Ansprüche, **dadurch gekennzeichnet, dass** das Wicklungssystem (2) der Radiallagerkomponente (1) aus drei Strängen (8a bis 8c) gebildet ist.

28. Elektrisches Magnetlagersystem nach Anspruch 27, **dadurch gekennzeichnet, dass** sich das Wicklungssystem (2) der Radiallagerkomponente (1) aus drei Strängen (8a bis 8c), die in einem Winkel von 120° zueinander angeordnet sind, gebildet ist.

29. Elektrisches Magnetlagersystem nach einem der vorhergehenden Ansprüche, **dadurch gekennzeichnet, dass** jeder Strang (8a bis 8d) als ein von mindestens einem Leistungsschalter (17) oder mindestens einer Halbbrücke (24) der Leistungselektronik (4) angesteuerter Strang ausgebildet ist.

30. Elektrisches Magnetlagersystem nach einem der vorhergehenden Ansprüche, **dadurch gekennzeichnet, dass** der magnetische Teil des Magnetlagersystems aus wenigstens einem Kombilager (25) und wenigstens einem weiteren Lager gebildet ist.

31. Elektrisches Magnetlagersystem nach Anspruch 30, **dadurch gekennzeichnet, dass** das wenigstens eine weitere Lager als Radiallager, Axiallager und/oder konisches Lager ausgebildet ist.

32. Elektrisches Magnetlagersystem nach einem der vorhergehenden Ansprüche, **dadurch gekennzeichnet, dass** der magnetische Teil des Magnetlagersystems aus zwei Kombilagern (25), die jeweils aus wenigstens einer magnetisch verbundenen Axiallagerkomponente (3) und wenigstens einer Radiallagerkomponente (1) bestehen, gebildet ist.

33. Elektrisches Magnetlagersystem nach Anspruch 32, **dadurch gekennzeichnet, dass** die axialen Steuerflüsse (6) der beiden Kombilager (25) zur Korrektur der axialen Rotorlage durch die Wicklungsströme so eingestellt sind, dass der Steuerfluss (6) des einen Kombilagers (25) als ein den permanentmagnetischen Vormagnetisierungsfluss (14) im axialen Luftspalt (12) dieses Lagers schwächender Steuerfluss (39) ausgebildet ist, während der Steuerfluss (6) des anderen Kombilagers (25) als ein den permanentmagnetischen Vormagnetisierungsfluss (14) im axialen Luftspalt (12) dieses Lagers stärkender Steuerfluss (40) ausgebildet ist oder umgekehrt.

34. Elektrisches Magnetlagersystem nach einem der vorhergehenden Ansprüche, **dadurch gekennzeichnet, dass** mindestens eine Radiallagerkomponente (1) des Kombilagers (25) durch ein permanentmagnetisch erregtes Multipolmagnetlager (27) oder durch ein permanentmagnetisch erregtes Unipolmagnetlager (26) gebildet ist.

35. Elektrisches Magnetlagersystem nach einem der vorhergehenden Ansprüche, **dadurch gekennzeichnet, dass** das Wicklungssystem (2) der Radiallagerkomponente (1) in Stern oder Dreieck verschaltet oder unverschaltet ist.

36. Elektrisches Magnetlagersystem nach einem der vorhergehenden Ansprüche, **dadurch gekennzeichnet, dass** Schenkel (34) mittels Stegen (35) miteinander verbunden sind.
